# EUROPEAN PATENT SPECIFICATION

(11) **EP 4 564 526 B1**
(45) Date of publication and mention of the grant of the patent: **06.05.2026**
(21) Application number: 23213125.0
(22) Date of filing: 29.11.2023
(51) Int. Cl.: H01M 10/613, H01M 10/615, H01M 10/6568, H01M 10/657

(54) **BATTERY SYSTEM WITH COOLING CIRCUIT**
BATTERIESYSTEM MIT KÜHLKREISLAUF
SYSTÈME DE BATTERIE AVEC CIRCUIT DE REFROIDISSEMENT

(43) Date of publication of application: 04.06.2025
(73) Proprietor: Samsung SDI Co., Ltd., Yongin-si, Gyeonggi-do 17084 (KR)
(72) Inventor: Ipek, Eymen, 8020 Graz (AT)
(74) Representative: Gulde & Partner

(56) References cited:
- WO-A1-2019/090345
- WO-A1-2022/255099
- CN-A- 116 344 999
- CN-A- 116 505 138

## Description

### Field of the Disclosure

The present disclosure relates to a battery system with a coolant circuit. The present disclosure further deals with a vehicle comprising the battery system. In addition, the present disclosure refers to a method of heating battery cells of a battery system.

### Technological Background

Recently, vehicles for transportation of goods and peoples have been developed that use electric power as a source for motion. Such an electric vehicle is an automobile that is propelled by an electric motor using energy stored in rechargeable batteries. An electric vehicle may be solely powered by batteries or may be a hybrid vehicle powered by for example, a gasoline generator or a hydrogen fuel power cell. A hybrid vehicle may include a combination of an electric motor and conventional combustion engine. Generally, an electric-vehicle battery (EVB, or traction battery) is a battery used to power the propulsion of battery electric vehicles (BEVs). Electric-vehicle batteries differ from starting, lighting, and ignition batteries in that they are designed to provide power for sustained periods of time. A rechargeable (or secondary) battery differs from a primary battery in that it is designed to be repeatedly charged and discharged, while the latter is designed to provide an irreversible conversion of chemical to electrical energy. Low-capacity rechargeable batteries are used as power supplies for small electronic devices, such as cellular phones, notebook computers and camcorders, while high-capacity rechargeable batteries are used as power supplies for electric and hybrid vehicles and the like.

Battery modules can be constructed either in a block design or in a modular design. In the block design, each battery is coupled to a common current collector structure and a common battery management system and the unit thereof is arranged in a housing. In the modular design, pluralities of battery cells are connected together to form submodules, and several submodules are connected together to form the battery module. In automotive applications, battery systems generally include a plurality of battery modules connected together in series to provide a desired voltage. The battery modules may include submodules with a plurality of stacked battery cells, and each stack includes cells connected in parallel that are, in turn, connected in series (*XpYs*) or cells connected in series that are, in turn, connected in parallel (*XsYp*).

To provide thermal control of the battery pack a thermal management system is required to safely use the at least one battery module by efficiently emitting, discharging, and/or dissipating heat generated from its rechargeable batteries. If the heat emission, discharge, and/or dissipation is not sufficiently performed, temperature deviations may occur between respective battery cells, such that the at least one battery module may no longer generate a desired (or designed) amount of power. In addition, an increase of the internal temperature can lead to abnormal reactions occurring therein and thus charging and discharging performance of the rechargeable battery deteriorates and the lifespan of the rechargeable battery is shortened. Thus, cell cooling for effectively dissipating heat from the battery cells is required.

Usually, a battery system includes a cooling circuit for thermal management. The battery system, in particular for automotive applications, is sensitive to environmental conditions and in particular to temperature. Low temperatures of the battery cells for example during charging may lead to weak performance and reduced lifetime.

Therefore, a pre-heating of the battery may be desirable to provide better performance for example during charging and extend lifetime.

Despite of that an electrical current flow can increase a temperature of a battery, even with this additional heat said charging at cold temperatures still remains a critical problem. An additional heater is required to allow reliable a pre-heating of the battery.

According to the state of the art, resistance heaters including a resistor with a voltage applied thereto are used either as foils between the cells or attached on the outside of a cooling plate. In such configuration heat has to be transferred from the resistance heaters to a coolant via the material of the cooling plate. This is however a slow form of heating which involves a lag time to reach a sufficient and desired temperature. The prior art CN 116 505 138 A discloses a battery using induction heating, wherein a hollow wire is provided on the battery and liquid cooling medium can flow through the hollow wire while being connected to a cooling system. The WO 2022/255099 A1 discloses a hollow coil for each battery cell through which a current passes through. The hollow coil is connected to a duct of the battery module by one end reaching into the duct so that cooling gas can be forcibly introduced to the inside of the hollow coil.

In establishing an improved heating concept including rapid heating it is of further significance to ensure that a heater modification avoids unnecessary leakage of coolant from the coolant channel through which the coolant is conducted. Furthermore, the coolant flow through the coolant channel should not be affected strongly. Additional problems become apparent in the following disclosure.

### Summary of Invention

The invention is defined by the appended claims. The description that follows is subjected to this limitation. Any disclosure lying outside the scope of said claims is only intended for illustrative as well as comparative purposes.

A battery system according to claim 1 of the appended set of claims is provided.

According to another aspect of the present disclosure, a vehicle including the battery system is provided.

According to another aspect of the present disclosure, a method of heating a plurality of battery cells of a battery system, wherein the method includes the steps of: providing a battery system according to the embodiments of the present disclosure. The method further includes heating at least a portion of the plurality of battery cells by inducing eddy currents in the ferrous material through operating of the eddy current heater.

Further aspects and features of the present disclosure may be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic top view of a battery system according to an embodiment.
- Fig. 2: illustrates an eddy current heater according to an embodiment.
- Fig. 3: is a sectional view taken along the line A-A of Fig. 1.
- Fig. 4: illustrates a schematic top view of a battery system according to another embodiment.
- Fig. 5: is a sectional view taken along the line B-B of Fig. 4 or along the line C-C of Fig. 6.
- Fig. 6: illustrates a schematic top view of cooling channel according to another embodiment.
- Fig. 7: is a sectional view taken along the line C-C of Fig. 6 or the line B-B of Fig. 4.
- Fig. 8: illustrates a schematic top view of a battery system according to another embodiment.
- Fig. 9: is a sectional view taken along the line D-D of Fig. 8.
- Fig. 10: illustrates a schematic top view of a battery system according to another embodiment.
- Fig. 11: is a sectional view taken along the line E-E of Fig. 10.
- Fig. 12: illustrates a method of heating a plurality of battery cells of a battery system according to an embodiment.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

In the drawings, the relative sizes of elements, layers, and regions may be exaggerated for clarity. As used herein, the term "and/or" includes any and all combinations of one or more of the associated listed items. Further, the use of "may" when describing embodiments of the present disclosure refers to "one or more embodiments of the present disclosure". In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

### General Concept

According to the invention, a battery system includes a plurality of battery cells accommodated in a housing. The battery system includes a cooling circuit or cooling system including a cooling channel, wherein the cooling circuit is configured to guide a coolant through the cooling channel. The coolant is in thermal contact with at least a portion of the plurality of battery cells while flowing through the cooling channel. The battery system further comprises an eddy current heater including a ferrous material. The eddy current heater is configured to heat the ferrous material by inducing eddy currents in the ferrous material and to transfer heat, from the ferrous material, to the coolant in the cooling channel. The ferrous material is positioned inside at least a portion of the cooling channel and/or surrounds at least a portion of the cooling channel.

The cooling channel may be in other words a cooling pipe or a cooling tube. The coolant circuit may be in other words a coolant system. The coolant circuit may include a pump to circulate the coolant along the coolant channel. The coolant may be a cooling liquid, for example, a cooling water or another type of a cooling liquid. The coolant liquid may have different levels of viscosity depending on the type of coolant used. A ferrous material may be a material primarily including iron. Ferrous materials may also include alloy steel, carbon steel, cast iron, wrought iron but the invention is not restricted thereto. Alloying elements may include chromium, vanadium, nickel and/or manganese but the invention is not restricted thereto. The eddy current heater may generate a time-variant magnetic field which induces eddy currents in the ferrous material in response to the interaction of the magnetic field with the ferrous material.

A technical advantage of using an eddy current heater including the ferrous material for providing eddy currents to heat the battery cells is that of a rapid and efficient heating. In particular, the ferrous material and power lines providing the AC power for field-inducing the eddy currents in the ferrous material can be spatially separated from each other so that the power lines are spatially separated from the coolant. Thus, there is no risk of bringing power lines into contact with the cooling liquid.

The positioning of the ferrous material with respect to the coolant channel has the following advantages. Since the ferrous material is not a section of the cooling channel, i.e., since being disposed therein or surrounding the cooling channel, an improved leakage resistance is reached. In more detail, compared to when the ferrous material is a section of the cooling channel, additional seals are required to connect the ferrous material part to the cooling channel part at the transitions therebetween. For example, the cooling channel may be made of aluminium different to a ferrous material. However, due to thermal expansion of the ferrous material when being heated, such seals are prone to leakage at least over a certain time. This problem is eliminated by the present disclosure since the ferrous material is not part of the cooling channel but rather is placed inside the cooling channel or surrounding it so that the leakage properties of the coolant channel remain unchanged.

Further, when the ferrous material is disposed inside the cooling channel, the heating distance to the coolant is reduced. That is, the heating effect is enhanced since the heating distance between heat source, here the ferrous material, and coolant is reduced. In addition, the cooling channel cannot act as thermal barrier. On the other hand, when the ferrous material surrounds the cooling channel, the coolant flow in the coolant channel remains unaltered since there is no channel cross section reduction. In addition, existing battery systems may be easily retrofittable by adding, e.g., sleeving or coating, the ferrous material to the outer surface of the coolant channel.

According to one embodiment, the ferrous material may include an inner ferrous coating which is attached to at least a portion of an inner surface of the cooling channel. Using an inner ferrous coating allows to provide a very thin layer of ferrous material so that the effective diameter or cross section of the cooling channel for transporting the coolant liquid is not strongly reduced.

Thus, the flow properties of the coolant are less affected. This may be for example important when a very viscous coolant is used so to prevent a (partial) clogging of coolant. As well, the heating distance, i.e., the distance between heat source and heat absorber (here coolant) is reduced further enhancing the heating efficiency. Further, the risk of bringing power lines into contact with the cooling liquid is eliminated.

According to one embodiment, the ferrous material may include at least an inner ferrous hollow body disposed inside the cooling channel to cover an inner surface of the cooling channel. Compared to the ferrous coating an enhanced heating effect may be achieved since more eddy currents may be induced in the hollow body material and higher thicknesses can be provided. That is, in a ferrous hollow body the eddy current may be formed in better manner and the heating due the enhanced eddy currents may be improved. The hollow body refers to a solid body as for example a cylinder or a ring/bracelet. As well, the heating distance, i.e., the distance between heat source and heat absorber (here coolant) is reduced further enhancing the heating efficiency.

According to one embodiment, the inner ferrous hollow body may include at least one of an inner ring and/or an inner hollow cylinder. A ring may also be in other words a bracelet. When using an inner ring, a local heating due to eddy currents formed in the ring may be provided. Since a ring has no substantial extension in a lengthwise direction, local heating can be provided. For example, this may be useful when not much axial length can be provided. For example, a ring may be suitable when placing the ferrous material at a coolant inlet (or coolant outlet) of the housing for providing the heating at a location where the coolant enters the battery system so that the coolant immediately has an increased temperature. A geometric cylinder allows for rapid heating in a region of predetermined length so that the heating interaction time is enhanced allowing for an improved heating effect.

According to one embodiment, the ferrous material may include a flat inner surface. Flat means in other words even. This embodiment has an effect of reduced flow resistance. I.e., the coolant flow through the part including the ferrous material inside the cooling channel has less flow resistance due to the even inner surface. This is for example helpful when using a more viscous coolant liquid.

According to one embodiment, the ferrous material may include a corrugated inner surface configured to increase the surface area with the coolant. Due to the corrugated surface the surface area of the ferrous material is increased. This may result in that a faster heat transferal can be provided due to increased heat transfer area for a given length. This may be in particular relevant for using an inner hollow cylinder.

According to one embodiment, the corrugated surface may include a plurality of ridges. The ridges may extend along the cooling cannel. The ridges may be used to transfer heat resulting from the eddy currents to enhance heating transfer to the coolant. This embodiment may be in particular relevant for using an inner hollow cylinder. The ridges may be protrusions in other words.

According to one embodiment, the ferrous material may include an outer ferrous coating attached to at least a portion of an outer surface of the cooling channel. This embodiment can be retrofitted in an easy manner for already existing cooling channels since an external coating can be easily added to an already existing cooling channel. Since the outer ferrous coating is not a section of the cooling channel, the cooling channel is maintained robust with respect to leakage. Further, the coolant flow in the coolant channel remains unaltered since there is no channel cross section reduction. In addition, since the external coating can be provided to be very thin, the effective thickness of cooling channel together with outer ferrous coating is not very thick.

According to one embodiment, the ferrous material includes at least one outer ferrous hollow body surrounding at least a portion of the cooling channel to cover an outer surface of the cooling channel. This embodiment can be easily retrofitted on already existing cooling channels since the outer ferrous hollow body may be sleeved on the cooling channel, i.e., on a straight part of the cooling channel. Since the outer ferrous hollow body is not a section of the cooling channel, the cooling channel is maintained robust with respect to leakage. Further, the coolant flow in the coolant channel remains unaltered since there is no channel cross section reduction. In addition, since the hollow body may host more eddy currents, good results for the heating efficiency may still be achieved to compensate for the coolant channel acting as thermal barrier. According to one embodiment the outer ferrous hollow body may include at least one of an outer ring and/or an outer hollow cylinder.

According to one embodiment, the ferrous material may be arranged at a coolant inlet for the cooling channel at the periphery of the housing and/or is extending from the coolant inlet along the cooling channel. Thus, local eddy current heating can be provided at entry so that the coolant entering the battery system already has enhance temperature so that the majority of the plurality of battery cells including battery cells close to the coolant inlet can be pre-heated according to the methods disclosed herein.

According to one embodiment, the ferrous material may be arranged at a coolant outlet of the cooling channel at a periphery of the housing and/or is extending to the coolant outlet along the cooling channel. This may provide a redundancy in case of that the eddy current heater at the coolant inlet stops working. In addition, this positioning may allow to reheat coolant which was cooled down during transport along the coolant channel due to heat transfer.

According to one embodiment, the cooling channel may be made of a non-ferrous material. Thus, the cooling channel in this invention can have optimized material selection for the coolant transport without having to be modified for the eddy current heating. For example, the cooling channel may be comprised by aluminium tubes that are welded together to form the cooling channel.

According to one embodiment, the eddy current heater may comprise a heating coil and a charging circuit connected with the heating coil through AC power lines configured to provide AC power, when being operated, to the heating coil for inducing eddy currents in the ferrous material. The AC power in the coil generates a time dependent magnetic field which interacts with the ferrous material to induce eddy currents in the ferrous material. A charging circuit may be in other words a charger. The advantage is that existing onboard chargers (of a vehicle) can be used to provide the alternating currents. Alternatively, bespoke circuits can be provided instead of a charging circuit. Existing onboard chargers have the ability to provide an AC power source. Because the chargers can work bidirectional, the AC power lines can also be used if the charger is not plugged into an AC power grid.

According to an embodiment, the ferrous material may be insulated by a dielectric material. The dielectric material may be plastic. This may prevent a direct contact of the ferrous material, in which the eddy currents are formed with the coolant in the cooling channel. This may be useful for embodiments in which the ferrous material is placed inside the coolant channel.

According to an embodiment, the ferrous material is integrated within micro spheres, wherein the micro spheres are dispersed in the coolant. The micro spheres may be surrounded by dielectric material (e.g., plastic). Thus, the eddy current heating may be achieved directly in the coolant thus effectively removing any heating distance. This may result in a more homogenous heating of the coolant, i.e., without having a heating profile across the cooling channel.

According to another embodiment, a vehicle includes the battery system according to one of the above-described embodiments. The vehicle may have the same advantages as already described and mentioned above in the context of the battery system.

According to a method of heating a plurality of battery cells of a battery system, wherein the method includes the steps of a) providing a battery system. The method may include the step of b) heating of the plurality of battery cells by inducing eddy currents in the ferrous material through operating of the eddy current heater. The heating method may have the same advantages on the battery system as already described and mentioned above with respect to the battery system.

### Specific Embodiments

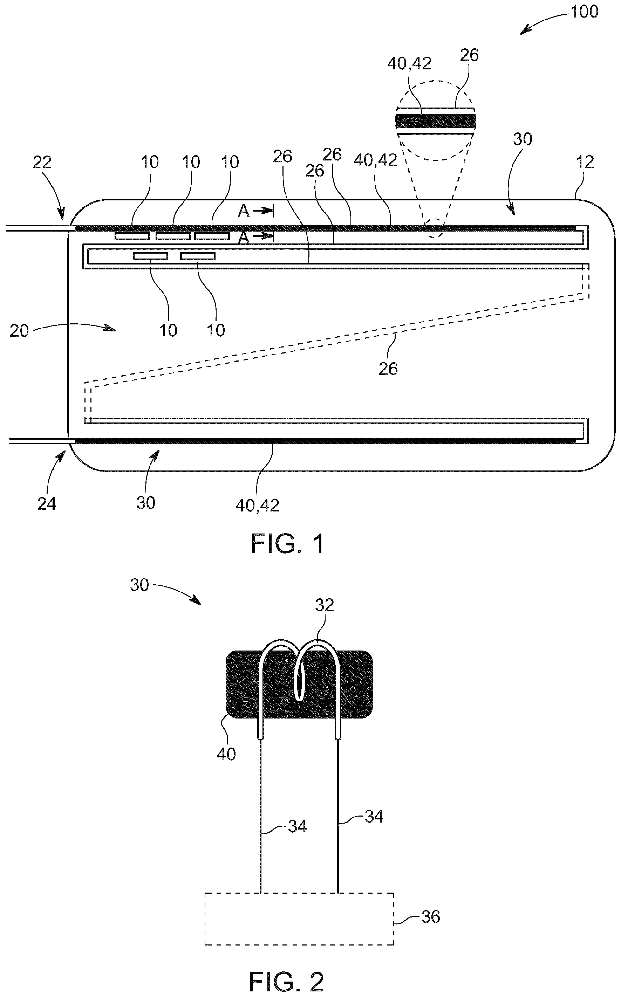

Fig. 1 is a top view illustrating a battery system 100 according to an embodiment of the invention. The battery system 100 includes a plurality battery cells 10. The battery cells 10 are merely schematically shown for illustration of the invention. In the present case according to Fig. 1, the battery cells 10 are prismatic battery cells 10 but the invention is not restricted thereto. For example, also spherical (or cylindrical) battery cells may be provided. The battery cells 10 may be interconnected with each other in a predetermined manner to provide a common output. The positioning of the battery cells 10 is not restricted to the positioning indicated in Fig. 1 but any other known positioning of battery cells 10 in a battery system 100 may be implemented.

The battery cells 10 are accommodated in a housing 12. The housing 12 is schematically illustrated in this projection by a contour. The edges of the housing 12 are formed to be round but this is merely for illustration and the invention is not restricted thereto. Other shapes of the housing 12 may be provided to form edges of the housing 12. The housing 12 may include compartments (not shown) in which the battery cells 10 are accommodated according to a predetermined positioning to be (stably) supported in the housing 12.

The battery system 100 further includes a cooling circuit 20 (cooling system). The cooling circuit 20 comprises a cooling channel 26. The cooling channel 26 is schematically shown in Fig. 1 which is guided according to a predetermined pathway through or along the housing 12. The battery system 100 may include a cooling plate (here not shown) disposed below the battery cells 10 for cooling the battery cells 10. The cooling channel 26 may then be provided in the cooling plate. However, the invention is not restricted thereto and the cooling channel 26 may also be an individual channel that is passing at least a portion of the battery cells 10 accommodated in the housing 12. The cooling channel 26 (see the dashed part) may therefore have various pathways and is not restricted to a particular pathway or route.

The cooling circuit 20 is configured to conduct a coolant through the cooling channel 26. The coolant, in particular a coolant liquid, is caused to flow through the cooling channel 26. The coolant is thermally connected with at least a portion of the plurality of battery cells 10 in the housing 12. This means that an amount of heat energy can be exchanged between at least a portion of the battery cells 10 and the coolant which is transported through the cooling channel 26.

The cooling channel 26 transports or circulates the coolant being in thermal contact with at least a portion of the plurality of battery cells 10 while flowing through the cooling channel 26. The flow of the coolant caused by the cooling circuit 20 may be provided a pump (here not shown). The pump may be controlled by corresponding control units for thermal management in a predetermined manner. Due to the thermal connecting of the coolant with the battery cells 10, controlling the temperature of the coolant allows to adjust the temperature of the battery cells 10 due to being in thermal contact with the coolant transported in the cooling channel 26.

The cooling channel 26 may pass through the assembly of battery cells 10 so to be in thermal contact with a maximum portion of the battery cells 10. For example, the cooling channel 26 may meander between rows of battery cells 10. However, the invention is not restricted thereto and the form of the cooling channel 26 in the housing 12 may have a different coolant channel pathway therebetween. Further, the cooling channel 26 may include a coolant inlet 22 and a coolant outlet 24 wherein the coolant may flow, be transported, between the coolant inlet 22 and the coolant outlet 24. The coolant inlet/outlet 22, 24 may be located at a periphery of the housing 12, which is schematically indicated in Fig. 1. The cooling channel 26 may include interconnected parts, i.e. a predetermined colling channel network, between the coolant inlet 22 and the coolant outlet 24 and the invention is not restricted to a particular cooling channel pathway. The cooling channel 26 may further be included in a coolant plate or may be individually guided through the housing 12 without being part of a cooling plate.

The battery system 100 further comprises an eddy current heater 30. The eddy current heater 30 includes a ferrous material 40. The ferrous material 40 is configured and positioned according to various embodiments of the present disclosure as will be disclosed below.

The eddy current heater 30 is configured to heat the ferrous material 40 by inducing eddy currents in the ferrous material 40. Thus, the material response of the ferrous material 40 capable of generating eddy currents is used by the eddy current heater 30. Therefore, the induced eddy currents then heat the material by Joule heating without a voltage being applied to the ferrous material 40. The heated ferrous material 40 can transfer heat to the coolant in the cooling channel 26 and the coolant in the cooling channel 26 flowing along the cooling channel 26 can transfer, by transport and by being thermal connected, the heat to at least a portion of the battery cells 10 of the battery system 100. The ferrous material 40 may further be insulated by a dielectric material, e.g. plastic (here not shown).

An example of an eddy current heater 30 is described with respect to Fig. 2. The eddy current heater 30 comprises a heating coil 32 which is connected to AC power lines 34. An AC power source, in this example a charging circuit 36, is connected with the heating coil 32 through the AC power lines 34 to cause, when being operated, the heating coil 32 to induce eddy currents in the ferrous material 40. In detail, the heating coil 32 produces a varying magnetic field in response to the provided AC power. The varying magnetic field interacts with the ferrous material 40 to generate the eddy currents in the ferrous material 40 as magnetic field response. The ferrous material 40 may be placed spatially distanced from the AC power lines 34 and/or the heating coil 32 such that field-induced eddy currents can be provided. The charging circuit has the advantage that existing resources of the vehicle can be used. In alternatives, a bespoke circuit may be provided as an AC power source instead of the charging circuit 36.

All embodiments of the present disclosure have in common that the ferrous material 40 is disposed inside at least a portion of the cooling channel 26 and/or surrounds at least a portion of the cooling channel 26. This has the effect that the ferrous material 40 does not become a section of the cooling channel 26 resulting in an improved leakage robustness. This is since no additional seals are required to connect the ferrous material 40 to the cooling channel 26 at the transitions therebetween which may lead to leakage over time due to repeated thermal expansion caused by heating. Thus, the present disclosure solves the leakage problem since the ferrous material 40 is not part of the cooling channel 26 but rather is placed inside the cooling channel 26 or surrounds it according to embodiments.

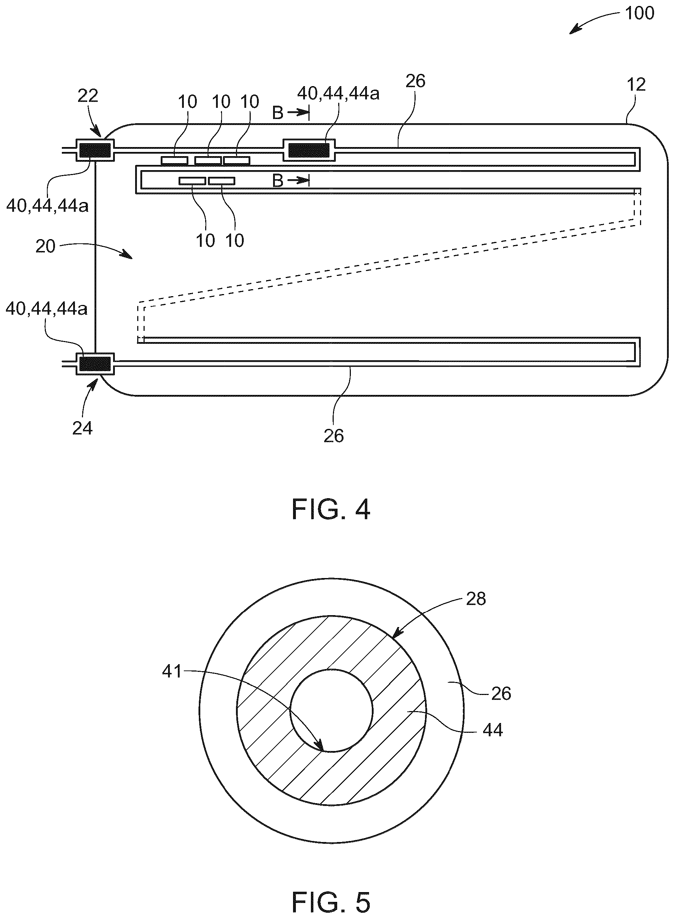

In accordance with Fig. 1, a preferred embodiment is provided which will be explained in the following. According to Fig. 1 (see as well Figs. 4 and 5), the ferrous material 40 is disposed inside at least a portion of the cooling channel 26. Since the ferrous material 40 disposed inside the cooling channel 26, the heating distance between the ferrous material 40 and the coolant in the cooling channel 26 is reduced. Thus, heating coupling between coolant and the ferrous material 40 is enhanced so that heating efficiency and rapidity is improved.

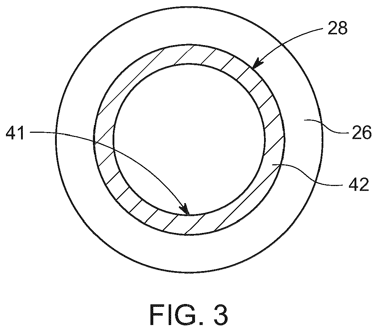

According to the preferred embodiment of Fig. 1, the ferrous material 40 includes an inner ferrous coating 42. The inner ferrous coating 42 is attached to at least a portion of an inner surface 28 of the cooling channel 26. This is illustrated in the preferred embodiment of Fig. 1 and is further illustrated in the cross section along the direction A indicated in Fig. 1 and as shown in Fig. 3. Using an inner ferrous coating 42 allows to provide a very thin layer of ferrous material. This can be seen in Fig. 3. The diameters are spherical but the invention is not restricted thereto. Thus, an effective inner diameter of the cooling channel 26 for transporting the coolant liquid is not strongly reduced so that coolant flow through cooling channel 26 including the inner ferrous coating 42 is not strongly impacted by the inner ferrous coating 42.

Further, as indicated in the embodiment of Fig. 3, the inner ferrous coating 42 may include a flat inner surface 41 so that an effect of reduced flow resistance is reached. This may be important when viscous coolant liquid is used to flow in the cooling channel 26.

In particular, in the present embodiment, the inner ferrous coating 42 is extending from the coolant inlet 22 along the cooling channel 26. This is a preferred positioning since the coolant entering through the coolant inlet 22 is heated in the initial part so that the temperature of a maximum number of battery cells 10 in the battery system 100 can be lifted (adjusted) by being thermally connected with the (heated) coolant in the cooling channel 26. Since the inner ferrous coating 42 extends along the cooling channel 26, higher temperatures in the coolant and the battery cells 10 due to increased heating interaction length. This may in particular compensate for the situation when the inner ferrous coating 42 is chosen very thin so that the amount of heating per area cannot be very high.

However, the present invention is not restricted thereto and also local heating can be provided for example by allowing that the inner ferrous coating 42 is arranged at a coolant inlet 22 for the cooling channel 26 at a periphery of the housing 12 (for example similar to the positioning in the embodiment of Fig. 4). Thus, a local heating of the coolant when entering the housing 12 is reached.

As shown in Fig. 1, the inner ferrous coating 42 is extending to the coolant outlet 24 along the cooling channel 26. This may imply a useful redundancy, for example in case the eddy current heater at the coolant inlet 22 may not function. Further, this positioning may allow to reheat the coolant which may have cooled down along the coolant path of the cooling channel 26 due to transferring heat to battery cells 10 so that also battery cells 10 located in the final part close to the coolant outlet 24 of the housing 12 may be exposed to heating.

However, the present invention is not restricted thereto and also local heating can be provided for example by allowing that the inner ferrous coating 42 is arranged at a coolant outlet 24 for the cooling channel 26 at a periphery of the housing 12 (for example similar to the positioning in the embodiment of Fig. 4). It is emphasized that the positioning in Fig. 1 is only an example and the inner ferrous coating 42 can also be formed along an entirety of the cooling channel 26. In other examples, the inner ferrous coating 42 may be disposed at particular segments of the cooling channel according to predefined positions.

Fig. 4 is a top view illustrating a battery system 100 according to another embodiment of the invention. For the sake of conciseness, only the differences with respect to the embodiment of Fig. 1 are described. For the features in common with Fig. 1, it is herewith referred to the above description. The embodiment can be combined with the embodiment as shown in Fig. 1.

In the embodiment of Fig. 4, the ferrous material 40 includes at least one inner ferrous hollow body 44 disposed inside the cooling channel 26 to cover an inner surface 28 of the cooling channel 26. An inner ferrous hollow body 44 may allow enhanced eddy current formation compared to a thin inner ferrous coating as the inner ferrous coating 42 of Fig. 1.

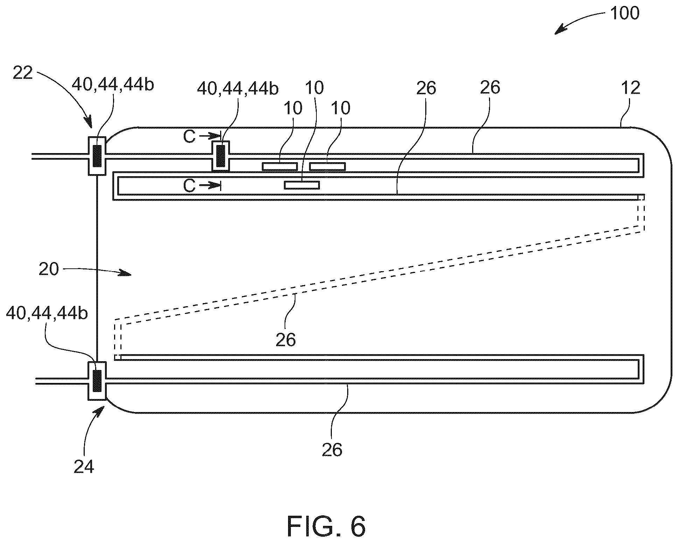

Also in this embodiment, the inner ferrous hollow body 44 may include a flat inner surface 41 as shown in the cross section of Fig. 5 to reduce flow resistance. The diameters are spherical but the invention is not restricted thereto. In embodiments, the coolant channel 26 may include a local widening section where the inner ferrous hollow body 44 is located (see Figs. 4 and 6) due to the thickness of the inner ferrous hollow body 44. Thus, the inner channel diameter of coolant channel accessible for the coolant to flow through may be maintained also in this section where the inner ferrous hollow body 44 is located. This may apply as well to Fig. 6. Therefore, effective coolant flow may be maintained despite of the presence of the inner ferrous hollow body 44. However, in other embodiments, no widening portion is provided.

In this embodiment of Fig. 4, the inner ferrous hollow body 44 includes an inner hollow cylinder 44a. The inner hollow cylinder 44a has a certain predefined length in a channel direction and thus can provide an increased amount of eddy current heating.

In the present embodiment, the inner hollow cylinder 44a is arranged at a coolant inlet 22 for the cooling channel 26 at a periphery of the housing 12 as indicated in Fig. 4. This may result in providing maximum heating coverage including the battery cells 10 positioned close to the coolant inlet 22. However, the invention is not restricted thereto and the inner hollow cylinder 44a may also be provided at different positions. For example, the inner hollow cylinder 44a may be arranged at a coolant outlet 24 for the cooling channel 26 at a periphery of the housing 12. In addition, the inner hollow cylinder 44a may be arranged inside the housing 12 at a predetermined position or predetermined positions.

Fig. 6 is a top view illustrating a battery system 100 according to another embodiment of the invention. For the sake of conciseness, only the differences with respect to the embodiment of

Fig. 4 are described. For the features in common with Fig. 4, it is herewith referred to the above description. The embodiment can be combined with the embodiment as shown in Fig. 1 and Fig. 4.

In comparison to Fig. 4, the inner ferrous hollow body 44 includes an inner ring 44b. An inner ring 44b compared to a cylinder may allow local heating without taking up much length in direction of the coolant channel 26, e.g. at the coolant inlet 22. This may be useful for positioning the inner ring 44b at the coolant inlet 22 and/or the coolant outlet 24 since less lateral space is required. The cross section of this embodiment may correspond to the cross section as shown in Fig. 5.

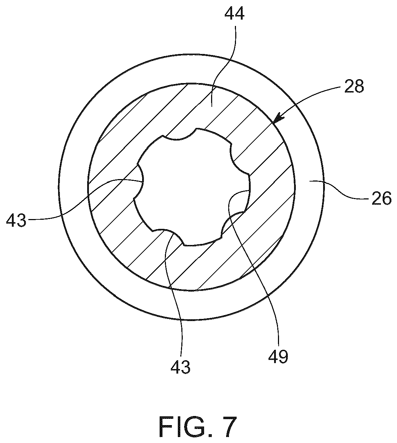

Fig. 7 shows a schematic cross section of a cooling channel 26 according to another embodiment. In this case, the inner ferrous hollow body 44 includes a corrugated inner surface 49 configured to increase the surface area with the coolant. This has an effect of improving the heat exchange with the coolant. According to Fig. 7, the corrugated inner surface 49 includes a plurality of ridges 43. The ridges 43 may extend along the cooling channel 26. Thus, this embodiment may be best compatible with the embodiment of the inner hollow cylinder 44a but can also be applied to the inner ring 44b. Thus, in this embodiment, heat transferal is increased by modifying the inner surface of the inner ferrous hollow body 44.

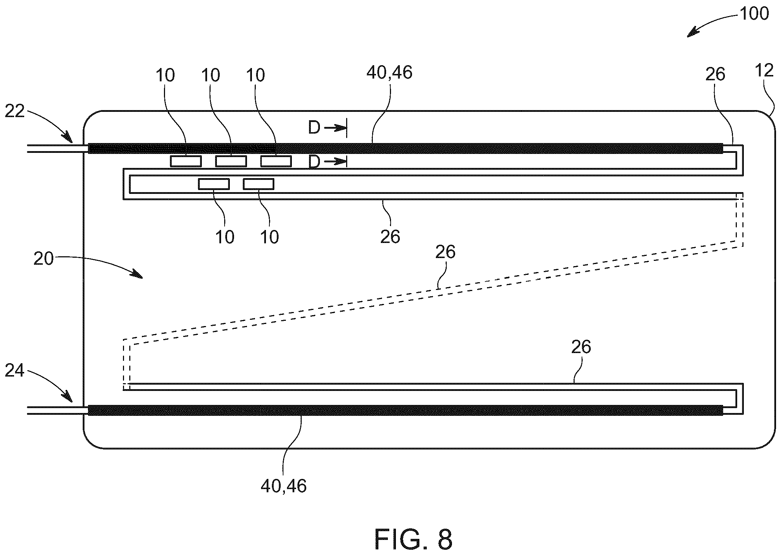

Fig. 8 is a top view illustrating a battery system 100 according to another embodiment of the invention. For the sake of conciseness, only the differences with respect to the embodiment of

Fig. 1 are described. For the features in common with Fig. 1, it is herewith referred to the above description. The embodiment can be combined with the embodiment as shown in Fig. 1 or as shown in Figs. 4 and 6.

In this embodiment, the ferrous material 40 includes an outer ferrous coating 46 attached to at least a portion of an outer surface 29 of the cooling channel 26. This embodiment may allow easier retrofitting of already existing cooling channels since an external coating can be easily added to a cooling channel 26. Further, any impact on the flow of the coolant in the cooling channel 26 is eliminated entirely.

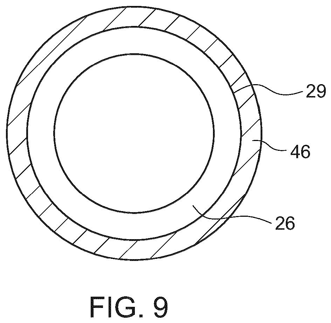

The present embodiment has the same positioning of the outer ferrous coating 46 with respect to the cooling channel 26 apart from being on the outer surface 29 when compared to Fig. 1. Any other positionings as described may also be used in this embodiment. A cross section of an example embodiment of Fig. 8 is further provided in Fig. 9 indicating a thin outer ferrous coating 46. The diameters are spherical but the invention is not restricted thereto. Thus, the volume occupied by the by the coolant channel 26 having the outer ferrous coating 46 is not strongly increased.

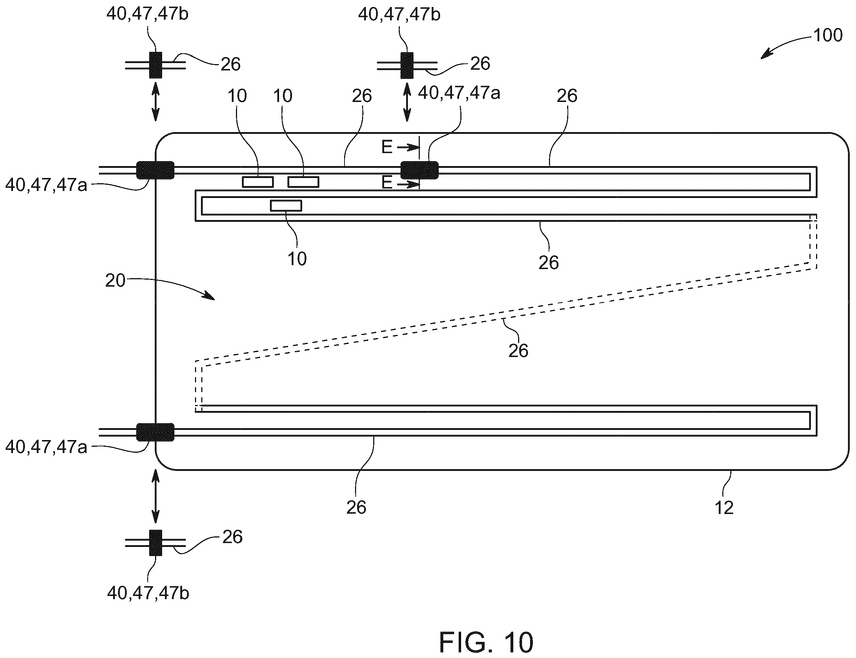

Fig. 10 is a top view illustrating a battery system 100 according to another embodiment of the invention. For the sake of conciseness, only the differences with respect to the embodiments of Fig. 4 or Fig. 6 are described. For the features in common with the embodiments of Figs. 4 and 6, it is herewith referred to the above description. Also the combination of Fig. 10 and Figs. 4 or 6 or any other embodiment are disclosed herewith.

The ferrous material 40 in this embodiment includes at least one outer ferrous hollow body 47 surrounding at least a portion of the cooling channel 26 to cover an outer surface 29 of the cooling channel 26.

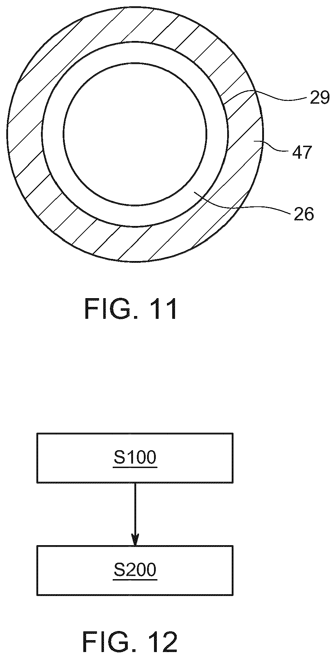

Therefore, the flow of the coolant is not affected by the outer ferrous hollow body 47. Such an embodiment may be retrofitted by sleeving the outer ferrous hollow body 47 on the cooling channel 26, i.e., on a straight part of the cooling channel 26. In the embodiment according to Fig. 10, the outer ferrous hollow body 47 may be an outer hollow cylinder 47a. However, as indicated in the Fig. 10, the outer hollow cylinder 47a may be replaced by an outer ring 47b. Also combinations thereof can be provided. No additional seals are required in such embodiments since the coolant channel 26 is not affected by the outer ferrous hollow body 47 and thus a coolant leakage problem is eliminated. Cross sections for illustration of the outer ferrous hollow body 47 are shown in Fig. 11. The diameters are spherical but the invention is not restricted thereto. Since the outer ferrous hollow body 47 may host more eddy currents, good results for the heating efficiency may still be achieved to compensate for the coolant channel 26 acting as thermal barrier.

Any embodiments and positionings of the ferrous material 40 can be combined with each other to form new embodiments. For example, an inner ferrous coating 42 and outer ferrous coating 46 can be combined. In an example, both inner and outer surfaces 28, 29 of a portion of the cooling channel 26 may be covered by the inner ferrous coating 42 and the outer ferrous coating 46. This may increase the eddy current heating effect. For example, an inner ferrous hollow body 44 and outer ferrous hollow body 47 may be combined. In an example, both inner and outer surfaces 28, 29 of a portion of the cooling channel 26 may be covered by the inner ferrous hollow body 44 and the outer ferrous hollow body 47. This may increase the eddy current heating effect. However, the combinations are not restricted to the explicit embodiments as mentioned above.

Fig. 12 illustrates a method of heating a plurality of battery cells 10 of a battery system according to an above-described embodiment. The method includes providing S100 a battery system 100 as defined according to any of the above embodiments. The battery system 100 may be one among the embodiments as described in the above manner. The method further includes the step of heating S200 at least a portion of the plurality of battery cells 10 of the battery system 100 by inducing eddy currents in the ferrous material 40 through operating of the eddy current heater 30. Rapid and efficient heating is provided by the heating method. The eddy current heater 30 may be configured according to the above-described preferred embodiments.

In summary, a battery system 100 with a coolant circuit and eddy current heater 30 including ferrous material 40 for allowing rapid and efficient heating without risk of bringing power lines into contact with the coolant. Further, various embodiments are provided in which the ferrous material 40 is not a section of the cooling channel 26 which results in improved leakage resistance. Various embodiments have a reduced heating distance and/or reduced flow resistance as detailed in the above disclosure in which further technical effects are described with more detail.

### Reference signs

- 100: battery system
- 10: battery cell
- 12: housing

- 20: cooling circuit
- 22: coolant inlet
- 24: coolant outlet
- 26: cooling channel
- 28: inner surface
- 29: outer surface

- 30: eddy current heater
- 32: heating coil
- 34: AC power line
- 36: charging circuit

- 40: ferrous material
- 41: flat inner surface
- 42: inner ferrous coating
- 43: ridge (heat exchanger)
- 44: inner ferrous hollow body
- 44a: inner hollow cylinder
- 44b: inner ring
- 46: outer ferrous coating
- 47: outer ferrous hollow body
- 47a: outer hollow cylinder
- 47b: outer ring
- 49: corrugated inner surface

- S100: providing
- S200: heating

## Claims

1. A battery system (100), comprising:
a plurality of battery cells (10) accommodated in a housing (12);
a cooling circuit (20) comprising a cooling channel (26) and configured to conduct a coolant through the cooling channel (26), wherein the coolant is in thermal contact with at least a portion of the plurality of battery cells (10) while flowing through the cooling channel (26);
an eddy current heater (30) comprising a ferrous material (40), wherein the eddy current heater (30) is configured to heat the ferrous material (40) by inducing eddy currents in the ferrous material (40) and to transfer heat to the coolant in the cooling channel (26);
**characterized in that**,
the ferrous material (40) is disposed inside at least a portion of the cooling channel (26) and/or surrounds at least a portion of the cooling channel (26).

2. The battery system (100) according to claim 1, wherein the ferrous material (40) comprises an inner ferrous coating (42) which is attached to at least a portion of an inner surface (28) of the cooling channel (26).

3. The battery system (100) according to any one of the claims 1 to 2, wherein the ferrous material (40) comprises at least one inner ferrous hollow body (44) disposed inside the cooling channel (26) to cover an inner surface (28) of the cooling channel (26).

4. The battery system (100) according to claim 3, wherein the inner ferrous hollow body (44) comprises at least one of an inner hollow cylinder (44a) and an inner ring (44b).

5. The battery system (100) according to any one of the preceding claims 2 to 4, wherein the ferrous material (40) comprises a flat inner surface (41).

6. The battery system (100) according to one of the claims 2 to 4, wherein the ferrous material (40) comprises a corrugated inner surface (49) configured to increase the surface area with the coolant.

7. The battery system (100) according to claim 6, wherein the corrugated surface (49) comprises a plurality of ridges (43).

8. The battery system (100) according to any one of the claims 1 to 7, wherein the ferrous material (40) comprises an outer ferrous coating (46) attached to at least a portion of an outer surface (29) of the cooling channel (26).

9. The battery system (100) according to any one of the claims 1 to 8, wherein the ferrous material (40) comprises at least one outer ferrous hollow body (47) surrounding at least a portion of the cooling channel (26) to cover an outer surface (29) of the cooling channel (26).

10. The battery system (100) according to one of the claims 1 to 9, wherein the ferrous material (40) is arranged at a coolant inlet (22) for the cooling channel (26) at a periphery of the housing (12) and/or is extending from the coolant inlet (22) along the cooling channel (26).

11. The battery system (100) according to one of the claims 10, wherein the ferrous material (40) is arranged at a coolant outlet (24) of the cooling channel (26) at a periphery of the housing (12) and/or is extending to the coolant outlet (24) along the cooling channel (26).

12. The battery system (100) according to any one of the preceding claims 1 to 11, wherein the cooling channel (26) is made of a non-ferrous material.

13. The battery system (100) according to any one of the preceding claims 1 to 12, wherein the eddy current heater (30) comprises a heating coil (32) and a charging circuit (36) connected with the heating coil (32) through AC power lines (34) to cause, when being operated, the heating coil (32) to induce eddy currents in the ferrous material (40).

14. A vehicle comprising the battery system (100) according to any one of the preceding claims 1 to 13.

15. A method of heating a plurality of battery cells (10) of a battery system (100), wherein the method comprises the steps of:
a) providing (S100) a battery system (100) as defined according to any of the claims 1 to 13;
b) heating (S200) at least a portion of the plurality of battery cells (10) of the battery system (100) by inducing eddy currents in the ferrous material (40) through operating of the eddy current heater (30).

## Patentansprüche

1. Batteriesystem (100), umfassend:
eine Mehrzahl von Batteriezellen (10), die in einem Gehäuse (12) aufgenommen sind;
einen Kühlkreislauf (20), der einen Kühlkanal (26) umfasst und dazu ausgebildet ist, ein Kühlmittel durch den Kühlkanal (26) zu leiten, wobei sich das Kühlmittel in thermischem Kontakt mit zumindest einem Teil der Mehrzahl von Batteriezellen (10) befindet, während das Kühlmittel durch den Kühlkanal (26) strömt;
eine Wirbelstromheizung (30), die ein Eisenmaterial (40) umfasst, wobei die Wirbelstromheizung (30) dazu ausgebildet ist, das Eisenmaterial (40) durch Induzieren von Wirbelströmen in dem Eisenmaterial (40) zu erwärmen und Wärme an das Kühlmittel in dem Kühlkanal (26) zu übertragen;
**dadurch gekennzeichnet, dass**
das Eisenmaterial (40) innerhalb zumindest eines Teils des Kühlkanals (26) angeordnet ist und/oder zumindest einen Teil des Kühlkanals (26) umgibt.

2. Batteriesystem (100) nach Anspruch 1, wobei das Eisenmaterial (40) eine innere Eisenbeschichtung (42) umfasst, die an zumindest einem Teil einer Innenfläche (28) des Kühlkanals (26) angebracht ist.

3. Batteriesystem (100) nach einem der Ansprüche 1 bis 2, wobei das Eisenmaterial (40) zumindest einen inneren Eisenhohlkörper (44) umfasst, der innerhalb des Kühlkanals (26) angeordnet ist, um eine Innenfläche (28) des Kühlkanals (26) abzudecken.

4. Batteriesystem (100) nach Anspruch 3, wobei der innere Eisenhohlkörper (44) zumindest eines von einem inneren Hohlzylinder (44a) und einem Innenring (44b) umfasst.

5. Batteriesystem (100) nach einem der vorhergehenden Ansprüche 2 bis 4, wobei das Eisenmaterial (40) eine flache Innenfläche (41) umfasst.

6. Batteriesystem (100) nach einem der Ansprüche 2 bis 4, wobei das Eisenmaterial (40) eine gewellte Innenfläche (49) umfasst, die dazu ausgebildet ist, die Oberfläche mit dem Kühlmittel zu vergrößern.

7. Batteriesystem (100) nach Anspruch 6, wobei die gewellte Oberfläche (49) eine Mehrzahl von Rippen (43) umfasst.

8. Batteriesystem (100) nach einem der Ansprüche 1 bis 7, wobei das Eisenmaterial (40) eine äußere Eisenbeschichtung (46) umfasst, die an zumindest einem Teil einer Außenfläche (29) des Kühlkanals (26) angebracht ist.

9. Batteriesystem (100) nach einem der Ansprüche 1 bis 8, wobei das Eisenmaterial (40) zumindest einen äußeren Eisenhohlkörper (47) umfasst, der zumindest einen Teil des Kühlkanals (26) umgibt, um eine Außenfläche (29) des Kühlkanals (26) abzudecken.

10. Batteriesystem (100) nach einem der Ansprüche 1 bis 9, wobei das Eisenmaterial (40) an einem Kühlmitteleinlass (22) für den Kühlkanal (26) an einer Peripherie des Gehäuses (12) angeordnet ist und/oder sich von dem Kühlmitteleinlass (22) entlang des Kühlkanals (26) erstreckt.

11. Batteriesystem (100) nach Anspruch 10, wobei das Eisenmaterial (40) an einem Kühlmittelauslass (24) des Kühlkanals (26) an einer Peripherie des Gehäuses (12) angeordnet ist und/oder sich zu dem Kühlmittelauslass (24) entlang des Kühlkanals (26) erstreckt.

12. Batteriesystem (100) nach einem der vorhergehenden Ansprüche 1 bis 11, wobei der Kühlkanal (26) aus einem Nichteisenmaterial hergestellt ist.

13. Batteriesystem (100) nach einem der vorhergehenden Ansprüche 1 bis 12, wobei die Wirbelstromheizung (30) eine Heizspule (32) und eine Ladeschaltung (36) umfasst, die mit der Heizspule (32) über AC-Stromleitungen (34) verbunden ist, um, wenn sie betrieben wird, die Heizspule (32) dazu zu veranlassen, Wirbelströme in dem Eisenmaterial (40) zu induzieren.

14. Fahrzeug, umfassend das Batteriesystem (100) nach einem der vorhergehenden Ansprüche 1 bis 13.

15. Verfahren zum Erwärmen einer Mehrzahl von Batteriezellen (10) eines Batteriesystems (100), wobei das Verfahren die Schritte umfasst:
a) Bereitstellen (S100) eines Batteriesystems (100) wie nach einem der Ansprüche 1 bis 13 definiert;
b) Erwärmen (S200) zumindest eines Teils der Mehrzahl von Batteriezellen (10) des Batteriesystems (100) durch Induzieren von Wirbelströmen in dem Eisenmaterial (40) mittels Betreibens der Wirbelstromheizung (30).

## Revendications

1. Système de batterie (100), comportant :
une pluralité d'éléments de batterie (10) logés dans un boîtier (12) ;
un circuit de refroidissement (20) comportant un canal de refroidissement (26) et configuré pour conduire un liquide de refroidissement à travers le canal de refroidissement (26), dans lequel le liquide de refroidissement est en contact thermique avec au moins une partie de la pluralité d'éléments de batterie (10) tout en s'écoulant à travers le canal de refroidissement (26) ;
un élément chauffant à courants de Foucault (30) comportant un matériau ferreux (40), dans lequel l'élément chauffant à courants de Foucault (30) est configuré pour chauffer le matériau ferreux (40) par l'induction de courants de Foucault dans le matériau ferreux (40) et pour transférer de la chaleur au liquide de refroidissement dans le canal de refroidissement (26) ;
**caractérisé en ce que**,
le matériau ferreux (40) est disposé à l'intérieur d'au moins une partie du canal de refroidissement (26) et/ou encercle au moins une partie du canal de refroidissement (26).

2. Système de batterie (100) selon la revendication 1, dans lequel le matériau ferreux (40) comporte un revêtement ferreux interne (42) qui est fixé à au moins une partie d'une surface interne (28) du canal de refroidissement (26).

3. Système de batterie (100) selon l'une quelconque des revendications 1 à 2, dans lequel le matériau ferreux (40) comporte au moins un corps creux ferreux interne (44) disposé à l'intérieur du canal de refroidissement (26) pour recouvrir une surface interne (28) du canal de refroidissement (26).

4. Système de batterie (100) selon la revendication 3, dans lequel le corps creux ferreux interne (44) comporte au moins l'un parmi un cylindre creux interne (44a) et une bague interne (44b).

5. Système de batterie (100) selon l'une quelconque des revendications 2 à 4 précédentes, dans lequel le matériau ferreux (40) comporte une surface interne plate (41).

6. Système de batterie (100) selon l'une des revendications 2 à 4, dans lequel le matériau ferreux (40) comporte une surface interne ondulée (49) configurée pour augmenter la surface spécifique en contact avec le liquide de refroidissement.

7. Système de batterie (100) selon la revendication 6, dans lequel la surface ondulée (49) comporte une pluralité de crêtes (43).

8. Système de batterie (100) selon l'une quelconque des revendications 1 à 7, dans lequel le matériau ferreux (40) comporte un revêtement ferreux externe (46) fixé à au moins une partie d'une surface externe (29) du canal de refroidissement (26).

9. Système de batterie (100) selon l'une quelconque des revendications 1 à 8, dans lequel le matériau ferreux (40) comporte au moins un corps creux ferreux externe (47) encerclant au moins une partie du canal de refroidissement (26) pour recouvrir une surface externe (29) du canal de refroidissement (26).

10. Système de batterie (100) selon l'une des revendications 1 à 9, dans lequel le matériau ferreux (40) est agencé au niveau d'une entrée de liquide de refroidissement (22) pour le canal de refroidissement (26) au niveau d'une périphérie du boîtier (12) et/ou s'étend à partir de l'entrée de liquide de refroidissement (22) le long du canal de refroidissement (26).

11. Système de batterie (100) selon la revendication 10, dans lequel le matériau ferreux (40) est agencé au niveau d'une sortie de liquide de refroidissement (24) pour le canal de refroidissement (26) au niveau d'une périphérie du boîtier (12) et/ou s'étend à partir de la sortie de liquide de refroidissement (24) le long du canal de refroidissement (26).

12. Système de batterie (100) selon l'une quelconque des revendications 1 à 11 précédentes, dans lequel le canal de refroidissement (26) est constitué d'un matériau non ferreux.

13. Système de batterie (100) selon l'une quelconque des revendications 1 à 12 précédentes, dans lequel l'élément chauffant à courants de Foucault (30) comporte une bobine de chauffage (32) et un circuit de charge (36) connecté à la bobine de chauffage (32) par le biais de lignes d'alimentation en CA (34) pour amener, lorsqu'il est mis en fonctionnement, la bobine de chauffage (32) à induire des courants de Foucault dans le matériau ferreux (40).

14. Véhicule comportant le système de batterie (100) selon l'une quelconque des revendications 1 à 13 précédentes.

15. Procédé de chauffage d'une pluralité d'éléments de batterie (10) d'un système de batterie (100), dans lequel le procédé comporte les étapes suivantes :
a) la fourniture (S100) d'un système de batterie (100) tel que défini selon l'une quelconque des revendications 1 à 13 ;
b) le chauffage (S200) d'au moins une partie de la pluralité d'éléments de batterie (10) du système de batterie (100) par l'induction de courants de Foucault dans le matériau ferreux (40) par le fonctionnement de l'élément chauffant à courants de Foucault (30).
